(19) Europäisches Patentamt
European Patent Office
Office européen des brevets

(11) Numéro de publication: **0 487 368 B1**

(12) # FASCICULE DE BREVET EUROPEEN

(45) Date de publication de fascicule du brevet: **08.03.95**

(21) Numéro de dépôt: **91402873.3**

(22) Date de dépôt: **25.10.91**

(51) Int. Cl.$^6$: **C22B 7/00**, C22B 3/36, C22B 3/14, C22B 3/30, B01J 23/94, B01J 38/64, C22B 34/36, C22B 34/34, C22B 34/22, C22B 23/02

(54) **Procédé de traitement antipollution d'un catalyseur de raffinage à l'état usé et récupération des métaux.**

(30) Priorité: **30.10.90 FR 9013601**

(43) Date de publication de la demande: **27.05.92 Bulletin 92/22**

(45) Mention de la délivrance du brevet: **08.03.95 Bulletin 95/10**

(84) Etats contractants désignés: **BE ES IT LU NL**

(56) Documents cités:

**EP-A- 0 244 014**
**US-A- 4 145 397**
**US-A- 4 432 953**
**US-A- 4 434 141**
**US-A- 4 500 495**
**US-A- 4 514 368**
**US-A- 4 514 369**
**US-A- 4 670 229**

(73) Titulaire: **INSTITUT FRANCAIS DU PETROLE**
**4, Avenue de Bois Préau**
**F-92502 Rueil-Malmaison (FR)**

(72) Inventeur: **Trinh Dinh, Chan**
**7, Allée des Oeillets**
**F-78110 Le Vesinet (FR)**
Inventeur: **Llido, Eric**
**Le Clos des Vignes**
**F-69360 Serezin du Rhone (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention se rapporte à un procédé de traitement antipollution et de la récupération des métaux d'un catalyseur de raffinage à l'état usé, procédé dans lequel on récupère les métaux de la solution d'extraction et dans lequel on obtient à la fois un solide résiduel et une phase aqueuse finale rejetables pour la protection de l'environnement.

Dans les opérations d'hydrotraitement ou d'hydroconversion d'une charge pétrolière, le catalyseur utilisé se couvre peu à peu des dépôts de carbone et d'au moins un métal contaminant choisi dans le groupe formé par le vanadium, le nickel et le fer, provenant de la charge traitée.

Ces dépôts métalliques forment une croûte autour de la surface extérieure des grains de catalyseur et limitent donc la diffusion des molécules d'hydrocarbures dans les pores du catalyseur. Il s'ensuit une perte progressive d'activité catalytique qui peut être totale lorsque tous les pores du catalyseur sont remplis desdits métaux.

Les catalyseurs de départ renferment généralement un support minéral, au moins un métal actif choisi parmi les métaux du groupe VIII (notamment le nickel, le cobalt et le fer), du groupe VI (notamment le tungstène, le molybdène) et le vanadium.

Par support minéral, on entend notamment les oxydes réfractaires d'un métal choisi dans le groupe formé par l'aluminium, le silicium tels par exemple le trioxyde d'aluminium, le dioxyde d'aluminium ou leurs mélanges.

On entend par catalyseur usé un catalyseur ne possédant plus de résistance mécanique suffisante et donc non régénérable. Ceci est dû à l'un au moins des cas suivants : recyclages répétés du catalyseur régénéré, conditions opératoires trop sévères et/ou de trop longue durée lors des opérations antérieures de raffinage d'une charge pétrolière. Le rejet en décharge terrestre d'un tel catalyseur contenant au moins un métal appartenant à l'ensemble formé par les groupes V, VI et VIII de la classification périodique des éléments est désormais interdit pour la protection de l'environnement et plus particulièrement des nappes phréatiques.

### Etat de la technique antérieure

Dans le procédé de traitement antipollution et de la récupération des métaux de la présente invention, on utilise une base alcaline ou un carbonate alcalin en solution aqueuse pour extraire les métaux d'un catalyseur usé, après une calcination dudit catalyseur.

On peut citer pour la comparaison les trois principaux procédés suivants dans lesquels l'extraction des métaux est également effectuée par une solution aqueuse de soude caustique ou de carbonate de sodium.

Selon le procédé de la récupération des métaux décrit dans le brevet US-A 4.495.157, le catalyseur usé est d'abord soumis à un traitement oxydant en présence d'une solution aqueuse de carbonate de sodium dans un appareillage type autoclave sous une pression d'oxygène de 5,5 à 17,2 bars et une température comprise entre 275 à 325 °C pendant une durée de quelques heures. Selon ce brevet la quantité de carbonate de sodium doit être suffisante pour extraire les métaux choisis dans le groupe formé par le vanadium et le molybdène, et pour neutraliser l'anhydride sulfurique formé.

La solution aqueuse basique résultante contient principalement du vanadate de sodium, du molybdate de sodium, du sulfate de sodium, de l'aluminate de sodium. Les métaux du groupe VIII tels le nickel et/ou le cobalt ne sont pas extraits.

Selon ledit brevet US-A 4.495.157, le molybdène est d'abord récupéré sous forme précipitée de disulfure de molybdène par bullage d'un courant gazeux de monosulfure d'hydrogène dans la solution après rajustement à un pH acide voisin de zéro par une solution aqueuse d'acide sulfurique, à une température de 80 °C pendant 20 minutes. Le rendement de la précipitation peut atteindre 99%.

Selon ce brevet, le vanadium est ensuite séparé sous forme d'un gâteau de couleur rouge répondant à la formule $Na_2HV_6O_{17}$. La précipitation nécessite un rajustement du filtrat précédent à un pH de l'ordre de 2,5 et une addition de chlorate de sodium. Après une trentaine de minutes de chauffage à l'ébullition, le rendement de la précipitation peut atteindre 99%.

Selon ce brevet US-A-4.495.157, le solide résiduel, séparé de la solution d'extraction, est de nouveau soumis à un traitement oxydant avec une solution aqueuse concentrée de soude caustique au moins égale à 20% poids, dans les conditions opératoires identiques à celles utilisées dans la première étape d'extraction des métaux.

La dissolution maximale de l'alumine est de 95% et le résidu solide final contient un mélange en pourcentage poids de 7% en nickel, 8,3% en cobalt et 5% en aluminium pour le cas du traitement d'un catalyseur usé contenant au départ en pourcentage poids de 4% de molybdène, 8% de vanadium, 1% de

cobalt, 2% de nickel, 10% d'huile, 10% de coke et 10% de soufre.

Dans ledit brevet, aucun exemple n'est décrit pour récupérer l'aluminium soluble présent dans le filtrat basique résultant.

Pour sa mise en application, le procédé dudit brevet présente les principales difficultés suivantes : d'une part le traitement de la lixiviation des métaux doit être effectué dans un appareillage sous pression, ce qui est moins aisé à mettre en oeuvre qu'une technique opérant à la pression atmosphérique, surtout lorsqu'il s'agit de traiter un catalyseur à l'échelle industrielle; d'autre part, le dégagement de quantités importantes de monosulfure d'hydrogène à l'étape de la précipitation du molybdène en disulfure de molybdène insoluble induit une pollution de l'atmosphère; enfin, l'utilisation de chlorate de sodium nécessaire pour la précipitation de vanadium risque d'être coûteuse.

Selon le procédé de la récupération des métaux décrit dans le brevet US-A 4.666.685, on peut obtenir une extraction sélective d'au moins un métal choisi dans le groupe formé par le vanadium et le molybdène en traitant directement un catalyseur usé préalablement réduit à l'état de poudre fine par une solution aqueuse de soude caustique ou une solution aqueuse basique contenant un mélange de soude caustique et d'aluminate de sodium, dans un appareillage type autoclave sous une pression d'oxygène de 10,3 à 41,4 bars, à une température comprise entre 149 °C et 260 °C, et une durée de réaction d'au moins 90 minutes.

Selon ce brevet, l'anhydride sulfurique formé est converti en sulfate de sodium ; de plus, le dioxyde de carbone doit être continuellement évacué au cours de la réaction vers l'extérieur de telle sorte à éviter une surpression dudit gaz à tout instant dans l'autoclave, le catalyseur usé mis à traiter n'étant préalablement pas déhuilé.

Pour un essai type décrit dans l'exemple 1 dudit brevet US-A 4.666.685, le traitement de 90 grammes d'un catalyseur d'hydrodésulfuration à l'état usé contenant en pourcentage poids 14,6% d'huile, 4,1% de molybdène, 7% de vanadium, 1,3% de nickel, 1,4% de cobalt, 6,3% de coke, 1,8% de sodium, 0,17% de calcium, 0,25% de silicium, 0,03% de chlore et complément d'aluminium et d'oxygène avec 1000 millilitres d'une solution aqueuse de soude caustique, de concentration égale à 25 grammes par litre, à une température de 200 °C, sous une pression partielle d'oxygène de 6,9 bars, une pression totale de 22,7 bars et une durée de réaction de 90 minutes, permet d'extraire en pourcentage poids 97% pour le molybdène et 90% pour le vanadium; de plus la concentration d'aluminium dans la solution d'extraction est faible, seulement de 0,070 gramme par litre; d'autre part la totalité des métaux non extraits choisis dans le groupe formé par le nickel et le cobalt reste concentrée dans le solide résiduel.

Dans ce brevet US-A 4.466.685, aucun exemple n' est décrit pour le traitement de la récupération d'au moins un métal choisi dans le groupe formé par le vanadium et le molybdène de la solution d'extraction.

On retrouve dans le procédé dudit brevet les principales difficultés déjà indiquées précédemment concernant le procédé décrit dans le brevet US-A-4.495.195.

Selon le procédé de la récupération des métaux décrit dans le brevet US-A 4.145.397, l'extraction d'au moins un métal choisi dans le groupe formé par le vanadium et le molybdène est effectuée en traitant un catalyseur usé après une calcination par de l'air à une température élevée généralement voisine de 850 °C et une solution aqueuse de soude caustique de concentration au moins égale à 10% poids, généralement entre 15 et 30% poids, à une température comprise entre 60 et 80 °C, pendant quelques heures.

Dans ce brevet, pour un essai type de traitement de 150 grammes d'un catalyseur usé après une calcination par de l'air à 850 °C et contenant en pourcentage poids 10,68% de vanadium, 5,49% de molybdène, 2,03% de cobalt, 1,94% de nickel, 35,48% d' aluminium avec une solution aqueuse de soude caustique à 15% poids, à 60 °C pendant 3 heures, les taux d'extraction des métaux sont respectivement en pourcentage poids de 84,99% pour le vanadium, 93,32% pour le molybdène, 0% pour le nickel, 0% pour le cobalt et 1,46% pour l'aluminium.

Dans ledit brevet US-A 4.145.397, le filtrat basique de lixiviation est mis à refroidir à une température voisine de 5 °C pour la précipitation du vanadium sous forme de cristaux de vanadate de sodium; de plus les taux de la précipitation des métaux sont en pourcentage poids de 82,75% pour le vanadium, 20,18% pour le molybdène et 0,03% pour l'aluminium; d'autre part, les cristaux séparés contiennent en pourcentage poids 75,39% de vanadium et 8,22% de molybdène.

Aucune méthode n'est décrite dans ledit brevet US-A 4.145.397, permettant une séparation correcte du sel de molybdène restant soluble dans la solution; d'autre part, le solide résiduel contenant encore une teneur globale élevée en métaux non extraits, en pourcentage poids d'environ 15% en vanadium, 6,5 à 7% en molybdène et la totalité des métaux du groupe VIII tels que le nickel et le cobalt non extraits ne pourrait sans doute pas être rejeté en décharge terrestre.

Le document US-A-4,514,368 décrit un procédé de traitement antipollution d'un catalyseur de raffinage à l'état usé, ledit procédé comportent une étape de calcination à une température comprise entre 400 et 600 °C, puis une étape de lixivation en présence d'une solution aqueuse contenant une base alcaline ($NH_4$

OH) et un carbonate alcalin ($(NH_4)_2CO_3$).

Le traitement antipollution et de la récupération des métaux d'un catalyseur de raffinage à l'état usé selon la présente invention se distingue des trois procédés précités décrits dans les brevets US-A 4.145.397, US-A 4.466.685, US-A 4.495.157 et présente un intérêt pour l'ensemble des avantages suivants :

- Mise en oeuvre simplifiée, ne nécessitant pas l'utilisation d'un appareillage sous pression
- Extraction partielle et relativement élevée des métaux du groupe VIII (par exemple le nickel, le cobalt et le fer), ainsi que séparation et récupération totale et sélective de ces métaux par rapport à ceux choisis dans le groupe formé notamment par le vanadium, le tungstène, le molybdène (et également l'aluminium du support du catalyseur) de la solution de lixiviation basique.
- Séparation et récupération totale et sélective de l'aluminium par rapport aux métaux choisis dans le groupe formé par le vanadium et le molybdène de la solution de lixiviation basique.
- Traitements économiques et à caractère non polluant des opérations de séparation et de précipitation des métaux contenus dans la solution de lixiviation basique.
- Obtention finale d'un solide résiduel dans le cas d'une extraction par de l'eau avant la lixiviation basique qui contient des quantités métalliques réduites et non lixiviables par de l'eau ; et dans le cas du traitement complet effectué selon les conditions préférées de l'invention, obtention d'une phase aqueuse finale ne contenant pratiquement que du chlorure de sodium ce qui permet par exemple son rejet en mer.

L'invention concerne un procédé de traitement antipollution d'un catalyseur de raffinage d'une charge pétrolière, lequel catalyseur, à support à base d'au moins une alumine a été désactivé et contient du carbone, au moins un métal du groupe VIII (notamment le nickel, le cobalt et le fer) et au moins un métal choisi dans le groupe formé par le vanadium et les métaux de groupe VI (notamment le molybdène et le tungstène); le procédé étant caractérisé en ce que 1) on calcine au cours d'une première étape ledit catalyseur en présence d'un gaz renfermant de l'oxygène moléculaire à une température ne dépassant pas 600 °C 2) on soumet au cours d'une deuxième étape à une lixiviation des métaux du catalyseur en présence d'une solution aqueuse contenant au moins un produit choisi dans le groupe formé par les bases alcalines et les carbonates alcalins, laquelle lixiviation permet l'obtention d'un précipité au solide contenant au moins un métal dudit groupe VIII notamment le nickel, le cobalt et le fer et d'un filtrat contenant de l'aluminium et au moins un métal choisi parmi le vanadium et les métaux du groupe VI notamment le vanadium et le molybdène.

Au cours de la lixiviation la concentration dudit produit choisi dans le groupe formé par les bases alcalines et les carbonates alcalins est de préférence comprise entre 0,1 gramme par litre et la saturation. Autour des deux étapes essentielles du procédé se greffent des modes opératoires préférés ainsi qu'il est expliqué ci-dessous.

## DESCRIPTION DE L'INVENTION

Selon la présente invention, le procédé de traitement antipollution et de la récupération des métaux d'un catalyseur de raffinage à l'état usé comporte principalement deux processus à savoir un processus principal qui est un traitement de la démétallation maximale de l'ensemble des métaux dudit catalyseur et un processus éventuel complémentaire comportant des traitements successifs des filtrats pour les récupérations séparées des métaux extraits.

### Premier processus : Extraction des métaux du catalyseur usé

Le traitement d'extraction des métaux d'un catalyseur usé se fait selon les étapes suivantes, représentées dans le schéma récapitulatif de la figure 1.

a) éventuellement le catalyseur usé déchargé d'une unité industrielle par une conduite (1) est d'abord soumis à un strippage (2) pour éliminer l'huile adhérente; ledit strippage se fait grâce à l'un des produits suivants : solvant aromatique (par exemple le toluène) un hydrocarbure saturé (par exemple un gas-oil). Tout autre moyen connu est aussi envisageable. On procède ensuite dans la zone (3) à l'élimination du solvant de strippage.

b) le catalyseur strippé à l'étape a) est ensuite calciné en présence d'un gaz renfermant de l'oxygène moléculaire (par exemple par de l'air) dans une zone 4 pour éliminer le carbone et transformer les sulfures métalliques en un mélange constitué par les oxydes et les sulfates métalliques correspondants. La température de calcination ne doit pas dépasser 600 °C pour minimiser (au mieux éviter) une interaction forte des oxydes formés avec l'alumine du support du catalyseur, ce qui aurait pour conséquence de limiter l'efficacité d'extraction des métaux par un traitement chimique ultérieur. Pour

une température exagérément élevée (par exemple égale ou supérieure à 800 °C) les résultats indiqués dans le brevet US-A 4.145.397 précité ont montré clairement que les taux de la démétallation du catalyseur traité en pourcentage poids ne peuvent dépasser les valeurs maximales d'environ 85% pour le vanadium et 93% pour le molybdène, et que les métaux du groupe VIII (tels le nickel et le cobalt) ne sont pas extraits. Dans la pratique, on constate qu'une température de calcination comprise entre 450 et 550 °C est préférable et de manière encore plus préférée une température voisine de 500 °C. Dans ces conditions, le carbone est pratiquement éliminé et tout sulfure d'un métal choisi dans le groupe formé par le sulfure de nickel, le sulfure de cobalt et le sulfure de fer, et présent dans le catalyseur, est transformé partiellement et de façon relativement importante en sulfate correspondant, et donc extractible par de l'eau.

c) le catalyseur calciné provenant de l'étape b) est de préférence dans une zone (5) d'abord soumis à une extraction de tout sulfate métallique par de l'eau permutée. La température d'extraction peut être comprise entre 0 °C et 100 °C mais une température ambiante (15 à 25 °C) est suffisante pour extraire totalement la majeure partie de tout sulfate métallique tel que défini à l'étape précédente. On récupère ainsi un filtrat 1 dans la zone (6) et le solide restant 1 dans une zone (10).

d) on a découvert que l'addition dans une zone (7) de base alcaline ou de carbonate alcalin (par exemple de la soude caustique ou du carbonate de sodium) dans le filtrat 1 provenant de l'étape c) à un pH basique de préférence égal ou supérieur à 10, suivie d'un chauffage par exemple à l'ébullition et pendant 15 à 30 minutes, permet de précipiter totalement et sélectivement tout métal choisi dans le groupe formé par le nickel, le cobalt et le fer présent en solution, tandis que tout métal choisi dans le groupe formé par le vanadium, le tungstène, le molybdène et l'aluminium et présent en solution est transformé en sel sodique correspondant et reste totalement soluble dans la solution du filtrat 2 récupéré en zone (8). Dans ces conditions, la précipitation de tout métal choisi dans le groupe formé par le nickel, le cobalt et le fer, et présent en solution, est en pourcentage poids proche de 100% d'après les résultats de dosage des métaux dans les solutions après précipitation.

Tout produit précipité tel que défini ci-dessus est à l'état amorphe selon l'analyse par la méthode de diffraction X. Les analyses par la méthode infra-rouge semblent indiquer qu'il s'agit d'hydroxydes ou de carbonates métalliques. Les réactions de précipitation seraient donc, par exemple pour le nickel :

$NiSO_4 + 2NaOH \rightarrow Ni(OH)_2 \downarrow + Na_2SO_4$

ou $NiSO_4 + Na_2CO_3 \rightarrow NiCO_3 \downarrow + Na_2SO_4$

Dans le cas d'au moins deux précipités, tout précipité tel que défini ci-dessus et récupéré dans la zone (9) se présente sous la forme d'une poudre très fine; la séparation par filtration classique est possible, cependant il est préférable d'utiliser la technique de centrifugation lorsqu'il s'agit de quantités importantes.

Comme le montre le schéma réactionnel de la figure 1. peut également extraire les oxydes métalliques du catalyseur calciné sans procéder nécessairement à une extraction préalable des sulfates métalliques selon les étapes c) et d) décrites ci-dessus. Dans ce cas on procède alors à une lixiviation directe du catalyseur calciné par une solution basique selon l'étape e) décrite ci-après, le solide résiduel contenant la totalité des métaux choisis dans le groupe formé par le nickel, le cobalt et le fer pouvant être avantageusement vendu à une entreprise minière spécialisée dans le traitement de la récupération desdits métaux au même titre que les minerais naturels.

e) une solution aqueuse par exemple de soude caustique ou de carbonate de sodium à une concentration suffisante par exemple comprise entre 10 et 40% poids est ajoutée dans une zone (11) soit au filtrat 2 de la zone (8) provenant de l'étape d), soit directement au catalyseur calciné provenant de la zone (4) de l'étape b) afin d'extraire tout oxyde d'un métal choisi dans le groupe formé par le vanadium, le tungstène et le molybdène et présent dans le catalyseur, soit du solide restant 1 de la zone (10), soit du catalyseur calciné directement, soit de l'un ou de l'autre de ces produits.

Une solution aqueuse de soude caustique ou de carbonate de sodium de concentration généralement comprise entre 10 et 30% poids est suffisante pour obtenir en zone (12) des taux élevés d'extraction de tout métal choisi dans le groupe formé par le vanadium, le tungstène et le molybdène et présent dans le catalyseur. Lorsqu'on utilise la soude caustique on utilise de préférence une concentration entre 15 et 30% poids; lorsqu'on utilise le carbonate de sodium on utilise de préférence une concentration entre 25 et 35% poids.

Dans une zone (16) on récupère un filtrat 3 sur lequel on peut effectuer divers traitements ainsi qu'il sera expliqué ci-dessous avec l'aide du schéma réactionnel de la figure 2.

La température de lixiviation basique est comprise entre la température ambiante (15 à 25 °C) et la température d'ébullition (100 °C± 5 °C), mais une température comprise entre 100 et 105 °C permet d'obtenir une extraction maximale de ces métaux pour une durée écourtée par exemple entre 1 et 3 heures.

f) Eventuellement le solide restant 2 accumulé dans la zone (13) provenant de l'étape c) après lixiviation basique en zone (12), dans le cas d'une extraction préalable par de l'eau en zone (5) (cas des étapes c) et d) incluses) peut être rejeté en décharge terrestre sans risque de pollution des nappes phréatiques, après un ultime traitement de purification, qui peut être l'un des traitements suivants :

- lessivage dans une zone (14) par de l'eau chaude par exemple dans un appareillage de Sohxlet pendant au moins 48 heures, les métaux restants étant non extractibles par de l'eau de pluie avec récupération d'un solide résiduel dans une zone (15).
- traitement thermique à une température élevée (supérieure à celle de la formation des aluminates métalliques réfractaires) dans le cas possible du contact ultérieur avec de la pluie dite acide.

Deuxième processus : traitements éventuels de la récupération des métaux choisis dans le groupe formé par le vanadium, le tungstène, le molybdène et l'aluminium des filtrats.

Le schéma récapitulatif des étapes successives de la séparation desdits métaux est représenté sur la figure 2.

Les étapes a) à f) décrites ci-dessus et comportant éventuellement les étapes c) et d) ou l'étape f) sont complétées par l'une des successions d'étapes suivantes : g), h), i), j), k), l) ; h), i), j), k), l).

g) Eventuellement le filtrat 3 de la zone (16) provenant de l'étape e) est d'abord mis à refroidir en zone (17) généralement à une température inférieure à la température ambiante, généralement à une température comprise entre -2 °C et 25 °C, de manière préférée à une température comprise entre la température correspondant à la limite supérieure de congélation et 15 °C, de manière encore plus préférée à une température voisine de 0 °C (0 °C ± 2 °C), de façon à obtenir une précipitation élevée et sélective de vanadium récupéré en zone (18) (précipité 2) sous forme de cristaux séparables de vanadate de sodium. Le rendement maximum de la précipitation peut être obtenu par un refroidissement prolongé par exemple au moins 22 heures à une température de 0 °C.

Lorsque la lixiviation basique a été faite avec une solution aqueuse de carbonate de sodium, la précipitation du vanadate de sodium s'effectue moins bien. Il convient d'opérer alors directement comme indiqué ci-dessous à l'étape h) et de ne pas procéder à l'étape g).

h) Le filtrat 4 obtenu en zone (19) provenant de l'étape g) ou le filtrat 3 de la zone (16) provenant de l'étape e) est ensuite traité en zone (20) par un courant de dioxyde de carbone à une température comprise entre la température ambiante (15 à 25 °C) et la température d'ébullition (100 °C ± 5 °C) de préférence à une température comprise entre 50 °C et 100 °C pendant une durée par exemple de 1 à 3 heures. Le débit horaire dudit gaz peut être compris entre 0,1 et 100 litres par kilogramme de catalyseur traité.

Les précipités blancs d'aluminium d'excellente filtrabilité sont identifiés par la méthode de diffraction X comme étant du trihydroxyde d'aluminium $Al(OH)_3$, pour un filtrat provenant d'une lixiviation basique de soude caustique et un carbonate mixte d'aluminium et de sodium communément appelé dowsonite et répondant à la formule chimique $NaAlCO_3(OH)_2$ dans le cas d'un filtrat provenant d'une lixiviation basique de carbonate de sodium, les deux précipités blancs sont obtenus pratiquement à l'état pur (zone (21), précipité 3).

On a découvert que le dowsonite précipité peut être converti intégralement en aluminate de sodium valorisable par un traitement thermique de décarbonatation et de déshydratation à une température au moins égale ou supérieure à 400 °C, de préférence à une température comprise entre 600 et 700 °C pour une durée écourtée d'une heure environ.

$$Na\ AlCO_3(OH)_2 \longrightarrow NaAlO_2 + CO_2 \uparrow + H_2O$$

Lorsqu'on effectue un traitement de la désalumination d'une solution aqueuse de lixiviation par la soude caustique, il se forme en même temps le carbonate de sodium selon les réactions :

$$2NaAlO_2 + CO_2 + 3H_2O \rightarrow 2Al(OH)_3 + Na_2CO_3$$

$2NaOH + CO_2 \rightarrow Na_2CO_3 + H_2O$ (excès)

Dans le cas d'une lixiviaton basique par le carbonate de sodium, on procède à au moins un recyclage de la solution obtenue (filtrat 3 après l'étape e)) en faisant au moins un ajout de carbonate de sodium et en réutilisant la solution ainsi obtenue pour l'étape e), lequel recyclage se fait en outre avant de procéder à l'étape h).

i) Le filtrat 5 de la zone (22) provenant de l'étape h) contient du carbonate de sodium soluble en excès formé à l'étape h) dans le cas de la lixiviation basique par une solution concentrée de sonde caustique ou mis en solution à l'étape e) dans le cas de la lixiviation basique par une solution aqueuse concentrée de carbonate de sodium. Le filtrat 5 est traité en zone (23) de façon à obtenir du bicarbonate de sodium précipité peu soluble au cours de la présente étape. Mais pour le cas de l'utilisation d'une solution aqueuse concentrée de carbonate de sodium à l'étape e) de la lixiviation, il est avantageusement économique de faire des ajouts de carbonate de sodium dans le filtrat 5 et d'utiliser la solution ainsi obtenue pour l'étape e) avant de procéder à la récupération dudit sel sous forme de bicarbonate de sodium peu soluble à la fin du recyclage.

Le filtrat 5 est donc traité par un bullage de dioxyde de carbone à basse température, généralement à une température comprise entre la température correspondant à la limite supérieure de congélation et la température ambiante, de préférence entre 0 et 10 °C permettant ainsi d'obtenir en zone (24) du bicarbonate de sodium précipité peu soluble (précipité 4) selon la réaction bien connue :

$Na_2CO_3 + CO_2 + H_2O \rightleftarrows 2HNaCO_3 \searrow$

Le débit du dioxyde de carbone est compris entre 0,1 et 100 litres par heure et par kilogramme de catalyseur traité.

Le précipité de bicarbonate de sodium obtenu à l'état pur est un produit commercialement valorisable.

j) le filtrat 6 de la zone (25) provenant de l'étape i) est d'abord neutralisé en zone (26) par une solution aqueuse concentrée d'acide chlorhydrique puis ramené de nouveau à un pH basique par exemple égal à 10 avant de le mettre à réagir en zone (27) avec un sel soluble de calcium pour une précipitation quasiment totale et complète des métaux choisis dans le groupe formé par le vanadium, le tungstène et le molybdène et présents en solution en un mélange précipité des oxydes mixtes de calcium insolubles et on récolte ainsi un précipité 5 en zone (28). On donne ci-après les réactions probablement mises en jeu dans le cas où le sel de calcium est le chlorure de calcium, et dans le cas de la présence de vanadium et de molybdène :

$Na_2Co_3$(résiduel) $+ H^+ + Cl^- \rightarrow Na^+Cl^- + H_2O + CO_2 \nearrow$
ions V et Mo $+ Na^+ + OH^- \rightarrow NaMoO_4 + NaVO_3 + H_2O$
$NaMoO_4 + Ca^{++} + Cl^- \rightarrow CaMOO_4{}^{*}\downarrow + Na^+ + Cl^-$
$NaVO_3 + Ca^{++} + Cl^- \rightarrow Ca_7V_4O_4{}^{*}\downarrow + Na^+ + Cl^-$

Le sel soluble de calcium est l'un au moins des composés suivants : chlorure de calcium, nitrate de calcium.

Le mélange précipité de molybdate de calcium et de vanadate de calcium peut parfaitement servir dans l'industrie sidérurgique. Il est bien connu que l'on doit ajouter du dihydroxyde de calcium en mélange avec l'un des constituants suivants : trioxyde de molybdène, pentoxyde de vanadium ou un mélange de ces deux oxydes pour éviter la volatisation desdits oxydes aux températures très élevées au-dessus du liquidus au cours de l'élaboration des aciers spéciaux. Une tendance plus récente consiste en une utilisation directe des oxydes mixtes de calcium et de molybdène ou de vanadium ou leurs mélanges formés préalablement par un traitement thermique à une température élevée entre le dihydroxyde de calcium et les oxydes desdits métaux.

Parmi les deux sels solubles de calcium, l'utilisation du chlorure de calcium est préférée, les ions nitrates étant considérés comme polluants.

k) Le filtrat 7 de la zone (29) provenant de l'étape j) après réajustement en zone (30) du pH à une valeur acide, par exemple un pH égal à 3, est passé en zone (31) sur une résine complexante convenablement choisie pour obtenir une phase aqueuse finale exempte de métaux toxiques. On constate que les groupements chélatants chimiques greffés sur un support polymérique les plus efficaces sont les

* identifiés par la méthode d'analyse par diffraction X.

suivants : un oxime, une quinoléine ou leurs dérivés - une rétention quasiment totale et complète des métaux résiduels choisis dans le groupe formé par le vanadium, le tungstène et le molybdène peut être ainsi obtenue.

l) la phase aqueuse acide provenant de l'étape k) est neutralisée en zone (32) par une solution aqueuse concentrée de soude caustique à un pH égal à 7. Elle ne contient donc finalement que du chlorure de sodium neutre. Une méthode adéquate consiste à rejeter en mer cette solution aqueuse.

EXEMPLES

Le taux d'extraction des métaux en pourcentage poids est déterminé à partir des dosages des métaux du catalyseur avant et après extractions des métaux par la méthode de fluorescence X. Il est calculé de la manière suivante :

$$\text{taux d'extraction} = \frac{Qi - Qf}{Qi} \times 100$$

Qi = quantité de métal en gramme contenu dans le poids en gramme du catalyseur mis à traiter.
Qf = quantité de métal en gramme contenu dans le poids du solide après extraction.

Le taux de la précipitation en pourcentage poids est déterminé à partir des dosages des métaux dans la solution avant et après précipitation par la méthode de plasma. Il est calculé de la manière suivante :

$$\text{taux de précipitation} = \frac{Qav - Qap}{Qav} \times 100$$

Qav = quantité de métal en gramme contenu dans le volume de solution mis à traiter.
Qap = quantité de métal en gramme contenu dans le volume du filtrat après séparation du précipité.

L'identification des précipités est effectuée par la méthode de diffraction X.

Les exemples suivants servent à illustrer et à montrer les avantages de la mise en pratique du procédé de la présente invention.

Origine et caractéristiques du catalyseur

On traite un catalyseur usé ayant une granulométrie comprise entre 500 et 1000 micromètres, retiré d'un réacteur à lit fixe, servant à une opération industrielle d'hydrotraitement d'une charge lourde de pétrole à Koweit.

Le catalyseur est d'abord déhuilé par toute méthode adéquate de strippage.

Le catalyseur déhuilé possède les caractéristiques indiqués dans le tableau 1 ci-dessous, colonne 1.

Tableau 1

| | 1 Catalyseur usé et déhuilé | 2 catalyseur déhuilé et calciné à 500 °C |
|---|---|---|
| Nickel, % pds | 1,84 | 2,47 |
| Vanadium, % pds | 7,51 | 10,23 |
| Cobalt, % pds | 1,27 | 1,80 |
| Molybdène % pds | 4,03 | 5,90 |
| Aluminium % pds | 20,01 | 29,78 |
| Soufre % pds | 10,70 | 1,82 |
| Carbone % pds | 26,00 | ≦ 0,1 |
| Volume poreux total ($cm^3/g$) | ≦ 0,10 | 0,33 |
| Résistance mécanique ESH (MPa) | n.d. | ≦ 0,3 |

Exemple 1

Deux calcinations du catalyseur usé et déhuilé ont été effectuées par de l'air à deux températures différentes qui sont 500 °C (catalyseur A) et 850 °C (catalyseur B). La composition du catalyseur A est donnée au tableau 1 colonne 2. Le catalyseur B n'est pas conforme à l'invention car il a été calciné à une température trop élevée.

La température de calcination dans les deux cas est progressivement augmentée par paliers successifs de 100 °C/h jusqu'à la température fixée où on laisse encore poursuivre l'opération de calcination pendant 3 heures.

Deux essais comparatifs d'extraction (étape c) du procédé) des métaux de ces deux catalyseurs A et B ont été effectués par de l'eau permutée à la température ambiante pendant 5 heures : quantité de chaque catalyseur mis à traiter : 300 grammes volume d'eau permutée : 1500 millilitres

Les résultats sont indiqués dans le tableau 2.

Tableau 2

| | Taux d'extraction des métaux (% poids) | | | | |
|---|---|---|---|---|---|
| | Ni | Co | V | Mo | Al |
| Catalyseur A | 44,5 | 50,5 | 12,3 | 22,0 | 4,2 |
| Catalyseur B | ≦ 0,1 | ≦ 0,1 | 0,4 | 0,3 | ≦ 0,1 |

Bien que la lixiviation basique conforme à l'invention n'ait pas encore été faite à ce stade, ces résultats montrent que les encore été faite à ce stade, ces résultats montrent que les extractions des métaux du groupe VIII ne sont possibles et ne peuvent atteindre des taux relativement élevés que si la température de calcination du catalyseur déhuilé est nettement inférieure à celle correspondant à la décomposition des sulfates métalliques.

Exemple 2

On opère sur le catalyseur A tel que traité à l'exemple 1. Cet exemple a pour but de montrer que l'on peut séparer les métaux du groupe VIII (ici le nickel et le cobalt) de ceux choisis dans le groupe formé par le vanadium, le tungstène, le molybdène et l'aluminium à partir du filtrat aqueux 1 du tableau 13 provenant de l'extraction aqueuse des sulfates métalliques du catalyseur A après une calcination par de l'air, par réaction avec la soude caustique ou le carbonate de sodium selon l'étape 1 du procédé de l'invention :
température de réaction : 90 °C
Durée de réaction : 30 minutes
pH après ajout NaOH ou $Na_2CO_3$ : 11

Tableau 3

| | | Concentration (g/l) | | | | |
|---|---|---|---|---|---|---|
| | | Ni | Co | V | Mo | Al |
| Avant réaction* | | 1,63 | 1,35 | 1,87 | 1,93 | 1,86 |
| Après Réaction | NaOH | ≦ 1ppm | 0,025 | 1,86 | 1,94 | 1,87 |
| | $Na_2CO_3$ | ≦ 1ppm | 0,016 | 1,88 | 1,94 | 1,84 |

* Filtrat 1 + eau de lavage du solide restant 1

La précipitation du nickel est totale. Le taux de précipitation du cobalt est au moins égal ou supérieur à 98% poids. Les métaux choisis dans le groupe formé par le vanadium, le molybdène et l'aluminium restent pratiquement en solution.

Exemple 3

On opère ici conformément aux étapes a) à e) du procédé. On effectue six essais en faisant réagir chaque fois un sixième du solide restant 1 après l'extraction du catalyseur A par de l'eau permutée selon l'essai de l'exemple 1 (étape c)) et un sixième de filtrat basique après précipitation du nickel et du cobalt selon l'essai de l'exemple 2 (étape d)), après des additions supplémentaires de soude caustique ou de carbonate de sodium selon l'étape e) dans ledit filtrat à des concentrations variables pour extraire les oxydes des métaux choisis dans le groupe formé par le vanadium, le molybdène et l'aluminium dudit solide en sels de sodium solubles.

Les conditions opératoires spécifiques de l'étape e) sont les suivantes :
température de réaction : ≃ 100 °C (ébullition)
durée de réaction : 2 heures
concentration de soude caustique ou carbonate de sodium : voir tableau 4.

Tableau 4

| Essai | Concentration (% pds) | | Taux d'extraction (% poids) | | | | |
|---|---|---|---|---|---|---|---|
| | NaOH | $Na_2CO_3 10H_2O$ | Ni | Co | V | Mo | Al |
| E1 | 5 | - | 0 | 0 | 73,6 | 83,9 | 6,7 |
| E2 | 20 | - | 0 | 0 | 90,1 | 94,9 | 24,9 |
| E3 | 30 | - | 0 | 0 | 92,8 | 97,4 | 38,5 |
| E4 | - | 5 | 0 | 0 | 47,8 | 68,5 | 1,5 |
| E5 | - | 20 | 0 | 0 | 57,2 | 81,0 | 2,6 |
| E6 | - | 30 | 0 | 0 | 75,2 | 85,7 | 4,9 |

Les résultats montrent qu'une concentration de soude caustique entre 20 et 25% poids environ est suffisante pour obtenir les taux élevés d'extraction de vanadium et de molybdène, se rapprochant des valeurs maximales. Pour le cas de traitement avec une solution aqueuse de carbonate de sodium décahydraté, il est avantageux de se limiter à une concentration entre 25 et 30% pour une extraction économique desdits métaux.

Exemple 4

On effectue une lixiviation basique en faisant réagir directement deux catalyseurs calcinés par de l'air à 500 °C (catalyseur A) et à 850 °C (catalyseur B) dans les conditions opératoires décrites au début de l'exemple 1 avec une solution aqueuse de soude caustique ou de carbonate de sodium, autrement dit non précédée d'une extraction aqueuse des sulfates métalliques, ce pour une comparaison des taux d'extraction des métaux.

Les conditions opératoires de la lixiviation basique sont identiques à celles indiquées dans l'exemple 3.

Tableau 5

| ESSAI | Concentration (% poids) | | Taux d'extraction (% poids) | | | | | CATALYSEUR |
|---|---|---|---|---|---|---|---|---|
| | NaOH | $Na_2Co_3 10H_2O$ | Ni | Co | V | Mo | Al | |
| E'1 | 5 | - | ≦ 0,1 | ≦ 0,1 | 70,9 | 77,8 | 19,1 | A |
| | | | 0 | 0 | 46,8 | 74,2 | ≦ 0,6 | B |
| E'2 | 15 | - | 0 | 0 | 79,8 | 90,1 | 26,1 | A |
| | | | 0 | 0 | 52,5 | 78,3 | ≦ 0,6 | B |
| E'3 | 30 | - | 0 | 0 | 89,7 | 94,7 | 40,2 | A |
| | | | 0 | 0 | 70,6 | 89,5 | ≦ 0,6 | B |
| E'4 | - | 5 | ≦ 0,1 | ≦ 0,1 | 50,3 | 74,1 | 1,8 | A |
| | | | 0 | 0 | 42,0 | 68,5 | ≦ 0,1 | B |
| E'5 | - | 15 | ≦ 0,1 | ≦ 0,1 | 58,9 | 83,5 | 3,5 | A |
| | | | 0 | 0 | 46,9 | 74,3 | ≦ 0,1 | B |
| E'6 | - | 30 | 0 | 0 | 74,7 | 89,0 | 3,7 | A |
| | | | 0 | 0 | 65,1 | 75,9 | ≦ 0,1 | B |

Les résultats du tableau 5 montrent qu'une calcination du catalyseur déhuilé par de l'air à une température élevée (en l'occurence à 850 °C) conduit à des taux d'extraction de vanadium et de molybdène nettement inférieurs à ceux obtenus avec un catalyseur dont la température de calcination est limitée à une valeur égale à 500 °C.

D'autre part, ces résultats montrent également que l'on peut extraire les métaux précités à des taux élevés directement à partir d'un catalyseur calciné à 500 °C sans procéder à une lixiviation préalable des sulfates métalliques par de l'eau.

Exemple 5

On refroidit (étape g)) 200 millilitres de chaque solution basique (filtrat 3) provenant des essais d'extraction des métaux selon l'exemple 3 pour précipiter le vanadate de sodium en cristaux séparables des sels sodiques de molybdène et d'aluminium restants solubles dans la solution.

Tableau 6

| Essai | solution basique provenant des essais de l'exemple 3 | Taux de précipitation (% poids) | | |
|---|---|---|---|---|
| | | V | Mo | Al |
| $P_1$ | $E_1$ | ≦ 0,2 | 0 | 2,2 |
| $P_2$ | $E_2$ | 86,6(1) | 0 | 0 |
| $P_3$ | $E_3$ | 89,9 | 0 | 0 |
| $P_4$ | $E_4$ | 0 | 0 | ≧ 99,0 |
| $P_5$ | $E_5$ | ≦ 0,5 | 0 | ≧ 99,0 |
| $P_6$ | $E_6$ | ≦ 1,0 | 0 | ≧ 99,0 |
| | | 24 heures -0 °C | | |

(1) Identification par diffraction X : mélange de vanadate de sodium : $Na_3VO_4$, $12H_2O^*$ + $NaVO_3$, $xH_2O$ + $Na_6V_2O_7$, $14H_2O$ + $Na_4V_2O_7$, $xH_2O$ (*: espèce prédominante).
Résultats des dosages des métaux des cristaux après recristallisation par, fluorescence X, en pourcentage poids :
Vanadium = 15,98%; Molybdène = 0%; Aluminium = 0,1%

Pour obtenir une précipitation élevée et se rapprochant ce la valeur maximale, l'extraction des métaux du catalyseur à l'étape précédente doit être effectuée avec une concentration de soude caustique au moins égale à 20% poids. On constate par contre que dans le cas des solutions basiques provenant du traitement du catalyseur avec une solution aqueuse de carbonate de sodium, la précipitation du vanadate de sodium est pratiquement nulle.

Exemple 6

On procède à une désalumination des filtrats provenant des essais P1 à P3 de l'exemple 4 par un bullage de dioxyde de carbone dans lesdits filtrats (étape h)), à une température d'ébullition (environ 102 °C) et un débit horaire dudit gaz égale à 60 litres pendant 1 heure et par kilogramme de catalyseur traité.

Tableau 7

| Filtrat provenant de l'essai | Traitement $CO_2$ - Reflux | solution métallique (g/l) V | Mo | Al | Taux de précipiation (% poids) V | Mo | Al | Précipité d'aluminium références (2) |
|---|---|---|---|---|---|---|---|---|
| P1 | Avant désalumination | 3,90 | 7,95 | 7,90 | | | | |
| P2 | | 1,98 | 8,99 | 11,91 | | | | |
| P3 | | 1,48 | 9,20 | 18,40 | | | | |
| P1 | Après désalumination | 3,92 | 7,97 | ⩽ 5ppm (1) | 0 | 0 | 100 | $P_1Al$ |
| P2 | | 2,01 | 3,90 | ⩽ 5ppm | 0 | 0 | 100 | $P_2Al$ |
| P3 | | 1,49 | 9,22 | ⩽ 5ppm | 0 | 0 | 100 | $P_3Al$ |

(1) Limite de détection par la méthode plasma

(2) Résultats des analyses par la méthode de diffraction X:

$P_1Al$ ⟶ essentiellement carbonate mixte de sodium et d'aluminium répondant à la formule $NaAlCO_3(OH)_2$ + traces de boéhmite Al O(OH)

$P_2Al$, $P_3Al$ ⟶ essentiellement trihydroxy d'aluminium $Al(OH)_3$ + traces de $NaAlCO_3(OH)_2$

La désalumination par l'action du gaz carbonique est donc une méthode très efficace. La précipitation et la pureté des précipités d'aluminium sont pratiquement égales à 100%

Exemple 7

Cet exemple a pour but de montrer que le filtrat 5 provenant de l'opération de la désalumination peut être recyclé moyennant des ajouts de carbonate de sodium consommé à l'étape de lixiviation de vanadium et de molybdène lors de la lixiviation par une solution aqueuse de carbonate de sodium à l'étape e).

Les conditions expérimentales sont les suivantes :

75,7 grammes du solide restant 1 après une extraction aqueuse de 100 grammes du catalyseur A calciné à 500 °C,

Solution de lixiviation : $Na_2CO_3$, $10H_2O$ = 150 grammes + 500 millilitres d'eau permutée,
Traitement de la lixiviation : température d'ébullition (≈ 102 °C) durée de réaction = 3 heures.

Tableau 8

| ESSAI | | Solution de lixiviation (filtrat | Ajout $Na_2CO_3$, $10H_2$ *produit chimique en grammes | Volume d'eau ajouté dans filtrat avant recyclage (ml) |
|---|---|---|---|---|
| $E_1$ | 1ère lixiviation | $S_1$ = 415 ml | 61,26 | 95 |
| E2 | 1er recyclage $S_1$ | $S_2$= 423 ml | 59,55 | 77 |
| $E_3$ | 2è recyclage $S_2$ | $S_3$= 444 ml | - | - |

* La quantité d'ajout de carbonate de sodium décahydraté dans le filtrat récupéré pour le réajustement à la concentration initiale avant recyclage est déterminée à partir des consommations théoriques nécessaires à la formation des sels sodiques de vanadium et de molybdène en tenant compte des taux d'extraction desdits métaux et de leurs teneurs dans le solide restant 1 après l'extraction aqueuse :

$$V_2O_5 + Na_2\ CO_3 \longrightarrow 2NaVO_3 + \overrightarrow{CO_2}$$
$$MoO_3 + Na_2\ CO_3 \longrightarrow Na_2\ MoO_4 + \overrightarrow{CO_2}$$

Tableau 9

| | Métaux (% pds -FX) | | | | Perte Pondérale (% pds) | Taux d'extraction % poids | | |
|---|---|---|---|---|---|---|---|---|
| | Ni | V | Mo | Al | | Ni | Mo | V |
| HMC 841 déhuilé et calciné | 599 | 12,86 | 5,32 | 29,03 | - | - | - | - |
| HMC 841 calciné après extraction aqueuse | 4,41 | 12,79 | 3,97 | 28,77 | 24,25 | 44,25 | 43,42 | 24,63 |
| 1ère lixiviation ($E_1$) | 6,18 | 3,57 | 0,43 | 37,9 | 15,70 | 0 | 90,93 | 76,47 |
| 1er recyclage (E2) | 6,70 | 3,82 | 0,32 | 39,9 | 24,80 | 0 | 93,95 | 77,56 |
| 2è recyclage (E3) | 6,77 | 3,12 | 0,28 | 39,9 | 20,90 | 0 | 94,46 | 80,69 |

Ces résultats montrent qu'il est possible et avantageux de recycler plusieurs fois de suite la solution basique de lixiviation dans les opérations successives par passe pour le traitement industriel d'une campagne de plusieurs tonnes de catalyseur d'hydrotraitement à l'état usé lors de l'utilisation d'une solution aqueuse de carbonate de sodium pour ladite lixiviation.

Exemple 8

On traite 50 millilitres des filtrats provenant des essais P2 de l'exemple 5 et P5 de l'exemple 4 par un bullage de dioxyde de carbone avec un débit de 60 litres par heure et par kilogramme de catalyseur traité mais à une température fixée égale à 0 °C pendant 3 heures pour transformer le carbonate de sodium en bicarbonate de sodium peu soluble (étape i) du procédé).

Tableau 10

| Filtrat provenant des essais | Traitement $CO_2$ - 0°C | Quantité HCl (1) utilisée (mole) | Taux de précipitation (% pds) | ESSAI |
|---|---|---|---|---|
| $P_2$ de l'exemple 5 | Avant | 0,0434 | 72,81 (2) (Précipité $P_25$) | B1 |
| | Après | 0,0118 | | |
| $P_5$ de l'exemple 4 | Avant | 0,0205 | 48,78 | B2 |
| | Après | 0,0105 | | |

(1) Réaction de dosage utilisée : $Na_2CO_3 + 2\ HCl \longrightarrow 2\ NaCl + \overrightarrow{CO_2} + H_2O$

(2) Résultats de l'analyse du précipité par diffraction X : mélange de $HNaCO_3$ (espèce prédominante) + $HNa_3(CO_3)_2$, $2H_2O$ + $Na_2CO_3,xH_2O$ (petite proportion).

Le taux de la précipitation nettement inférieur dans le cas du filtrat 5 (essai B2) est dû sans doute à la limite de solubilité du bicarbonate de sodium dans l'eau qui est de 7 grammes pour 100 millilitres à 25 °C selon le HANDBOOK OF CHEMISTRY AND PHYSICS 64$^{TH}$ EDITION 1983-1984.

Exemple 9

Cet exemple a pour but de montrer que l'on peut précipiter quantitativement les sels sodiques de vanadium et de molybdène restants solubles dans le filtrat 6 provenant de la bicarbonatation.

On fait réagir le filtrat 6 provenant de l'essai B1 de l'exemple 6 avec du chlorure de calcium en solution aqueuse concentrée après réajustements successifs dudit filtrat d'abord à un pH égal à 3 puis à un pH égal à 10 par l'acide chlorhydrique puis par la soude caustique en solution aqueuse concentrée :

température de réaction = 25 °C
durée de réaction = 1 heure

Tableau 11

| | Concentration (g/l) | | Taux de précipitation (% poids) |
|---|---|---|---|
| | V | Mo | |
| Avant précipitation | 1,74 | 7,57 | V ⩾ 99,48 |
| Après précipitation | ⩽ 10 ppm | 0,11 | Mo = 98,55 |

**Résultats d'analyse du mélange précipité par diffraction X :**

$CaMoO_4^{*} + Ca_7V_4O_{17}$ * + $Ca_2V_2O_7$

*** espèces prédominantes.**

La précipitation par les ions de calcium s'avère donc être une méthode économique et très efficace pour la récupération des sels sodiques solubles de vanadium et de molybdène. La solution aqueuse de chlorure de calcium utilisée comme réactif de précipitation peut être obtenue de façon économique par réaction entre la chaux et l'acide chlorhydrique.

Exemple 10

On illustre par cet exemple que les métaux résiduels choisis dans le groupe formé par le vanadium et le molybdène restants solubles dans le filtrat après la précipitation desdits métaux par le chlorure de calcium peuvent être captés sur une résine complexante convenablement choisie. On fait circuler en continu ledit filtrat après rajustement du pH à 3 par une solution aqueuse concentrée d'acide chlorhydrique, à travers une colonne contenant la résine DUOLITE ES 346 :

Température : 25 °C
Débit de pompage : 5 litres/heure
Volume du filtrat : 300 millilitres
Résine Duolite ES 346 : 50 grammes *
Durée : 3 heures.

Tableau 12

| | Concentration (mg/l) | |
|---|---|---|
| | V | Mo |
| solution avant passage sur résine | ≦ 10 | 105-110 |
| solution après passage sur résine | ≦ 2 | ≦ 2 |

Après neutralisation à un pH égal à 7 par une solution aqueuse de soude caustique, la phase aqueuse finale exempte de métaux toxiques et ne contenant que du chlorure de sodium neutre peut être rejetée sans risque de pollution, par exemple en mer.

* La résine étant préalablement conditionnée avec une solution aqueuse diluée d'acide chlorhydrique jusqu'à un pH constant et égal à 3.

**Revendications**

1. Procédé de traitement antipollution d'un catalyseur de raffinage d'une charge pétrolière, lequel catalyseur, à support à base d'au moins une alumine a été désactivé et contient du carbone, au moins un métal du groupe VIII (notamment le nickel, le cobalt et le fer) et au moins un métal choisi dans le groupe formé par la vanadium et les métaux du groupe VI (notamment le molybdène et le tungstène) ; le procédé étant tel que :

   1) on calcine au cours d'une première étape ledit catalyseur en présence d'un gaz renfermant de l'oxygène moléculaire à une température ne dépassant pas 600 ° C ;

   et caractérisé en ce que :

   2) on soumet au cours d'une deuxième étape à une lixiviation des métaux du catalyseur en présence d'une solution aqueuse contenant de la soude caustique ou bien du carbonate de sodium à une concentration comprise entre 0,1 gramme et la saturation à une température comprise entre la température ambiante et la température d'ébullition, ladite lixiviation permettant d'obtenir un filtrat 2 contenant de l'aluminium et au moins un métal choisi dans le groupe formé par le vanadium et les métaux du groupe VI et un solide 1 contenant au moins ledit métal du groupe VIII.

2. Procédé selon la revendication 1 dans lequel,

   a) on soumet le catalyseur usé, préalablement aux dites deux étapes, à une strippage par solvant pour éliminer l'huile adhérente,

   b) on soumet le catalyseur strippé à l'opération de ladite première étape, avant de procéder ultérieurement à ladite deuxième étape.

3. Procédé selon la revendication 2 dans lequel à l'issue de l'étape a) et de l'étape b) on effectue

   c) une extraction à l'eau permutée du catalyseur calciné obtenu à l'étape b) de la majeure partie des sulfates métalliques (solide restant 1).

   d) on ajoute au filtrat 1 obtenu en c) une base caustique ou un carbonate alcalin à un pH compris entre 10 et 11 avec chauffage ultérieur pour précipiter les métaux du groupe VIII tels que nickel, cobalt et fer et transformer les sels sodiques solubles dans le filtrat 2 des métaux choisis dans le groupe formé par les métaux du groupe VI et le vanadium,

   e) on effectue ladite deuxième étape, étape de lixiviation définie à la revendication 1, sur ledit filtrat 2 provenant de d) avec extraction subséquente des oxydes des métaux choisis dans le groupe formé par le vanadium, le molybdène et le tungstène, l'extraction étant réalisée éventuellement également sur ledit solide restant 1 obtenu à l'étape c) avec obtention d'une part d'un solide restant 2 et d'un filtrat 3.

4. Procédé selon la revendication 3 caractérisé en ce que l'issue de l'étape de lixiviation le solide est soumis dans une étape f) à un ultime traitement de purification, qui est l'un au moins des traitements suivants :

   - lessivage par de l'eau chaude
   - traitement thermique à une température supérieure à la température de formation des aluminates métalliques réfractaires.

5. Procédé selon l'une des revendications 1 à 4 caractérisé en ce que à l'issue de l'étape de lixiviation lorsque celle-ci est effectuée en présence de soude caustique on traite le filtrat 3 de ladite lixiviation selon les étapes suivantes dans le cas où au moins un métal choisi dans le groupe formé par le vanadium, le tungstène et le molybdène est présent :

   g) ledit filtrat de la solution de lixiviation est refroidi à une température comprise généralement entre -2 ° C et 25 ° C avec précipitation de vanadium.

   h) la solution (filtrat 4) obtenue à l'étape g) est désaluminée par l'action du dioxyde de carbone gazeux à une température comprise généralement entre 25 ° C et la température d'ébullition avec un débit dudit gaz compris entre 0,1 et 100 litres par heure et par kilogramme de catalyseur traité, engendrant du carbonate de sodium.

   i) le carbonate de sodium provenant au moins des opérations suivantes :

      - utilisation à l'étape e) de la revendication 4 (ou étape 2 de la revendication 1)
      - formation en excès à l'étape h)

   et soluble dans la solution obtenue à l'étape h), est précipité en bicarbonate de sodium peu soluble par l'action du dioxyde de carbone gazeux à une température comprise entre la température limite

supérieure de congélation et la température ambiante, avec un débit dudit gaz compris entre 0,1 et 100 litres par heure et par kilogramme de catalyseur traité.

j) les sels sodiques solubles de tout métal choisi dans le groupe formé par le vanadium, le tungstène et le molybdène, et présent en solution, sont précipités par réaction avec un sel soluble de calcium à partir du filtrat de ladite lixiviation.

**6.** Procédé selon l'une des revendications 1 à 5 caractérisé en ce que à l'issue de l'étape de lixiviation lorsque celle-ci est effectuée en présence du carbonate de sodium on traite le filtrat 3 de ladite lixiviation selon les étapes suivantes, dans le cas où au moins un métal choisi dans le groupe formé par le vanadium, le tungstène et le molybdène est présent :

g) la solution (filtrat 3) obtenue à l'étape e) est désaluminée par l'action du dioxyde de carbone gazeux à une température comprise généralement entre 25 ° C et la température d'ébullition avec un débit dudit gaz compris entre 0,1 et 100 litres par heure et par kilogramme de catalyseur traité, engendrant le carbonate de sodium.

h) le carbonate de sodium, provenant au moins de l'une des opérations suivantes :

- utilisation à l'étape e) de la revendication 4 (ou étape 2 de la revendication 1),
- formation en excès à l'étape h)

et soluble dans la solution obtenue à l'étape h), est précipité en bicarbonate de sodium peu soluble par l'action du dioxyde de carbone gazeux à une température comprise entre la température limite supérieure de congélation et la température ambiante avec un débit dudit gaz compris entre 0,1 et 100 litres par heure et par kilogramme de catalyseur traité.

i) les sels sodiques solubles de tout métal choisi dans le groupe formé par le vanadium, le tungstène et le molybdène, et présent on solution, sont précipités par réaction avec un sel soluble de calcium à partir du filtrat de ladite lixiviation.

**7.** Procédé selon la revendication 6 caractérisé en ce que on procède à au moins un recyclage de la solution obtenue (filtrat 3) après l'étape e) en faisant au moins un ajout de carbonate de sodium et en réutilisant la solution ainsi obtenue pour l'étape e), lequel recyclage se fait en outre avant de procéder à l'étape g).

**8.** Procédé selon l'une des revendications 5 à 7 caractérisé en ce que la solution obtenue à l'étape j) de la revendication 5 ou à l'étape i) de la revendication 6 est passée sur une résine complexante.

**9.** Procédé selon la revendication 8 caractérisé en ce que la résine complexante comporte au moins une des fonctions choisies dans le groupe constitué par l'oxime, la quinoléine, les dérivés de l'oxime et les dérivés de la quinoléine.

**10.** Procédé selon l'une des revendications 5 a 9 caractérisé en ce que le sel de calcium utilisé à l'étape j) de la revendication 5 ou à l'étape i) de la revendication 6 est choisi dans le groupe formé par le chlorure de calcium et le nitrate de calcium.

## Claims

**1.** Process of anti-pollution treatment of a catalyst for refining a petroleum charge, wherein the catalyst has a carrier based on at least one alumina, has been deactivated and contains carbon, at least one metal from group VIII (particularly nickel, cobalt and iron) and at least one metal selected from the group formed by vanadium and group VI metals (particularly molybdenum and tungsten), the process being such that

1) in a first stage the catalyst is calcined in the presence of a gas containing molecular oxygen at a temperature not exceeding 600 ° C,

and the process being characterised in that

2) in a second stage metals in the catalyst are subjected to lixiviation in the presence of an aqueous solution containing caustic soda or sodium carbonate and at a temperature comprised between ambient temperature and boiling temperature, the concentration of said solution being comprised between 0,1 gram per litre and saturation, said filtrate 2 containing aluminium and at least one metal selected from vanadium and group VI metals, and a solid 1 which contains at least one metal selected from group VIII metal.

**2.** Process according to claim 1, wherein :
a) before the said two stages the exhausted catalyst is subjected to stripping by a solvent to eliminate the oil adhering to it,
b) the stripped catalyst is subjected to said first stage operation before subsequently proceeding to said second stage.

**3.** Process according to claim 2, wherein stage a) and stage b) are followed by the following steps,
c) extracting most of the metal sulphates (residual solid 1) from the calcined catalyst obtained in stage b) with softened water,
d) adding a caustic base of an alkali metal carbonate with a pH from 10 to 11 to filtrate 1 obtained at stage c), with subsequent heating to precipitate the group VIII metals such as nickel, cobalt and iron, and to convert those sodium salts of metals selected from the group formed by group VI metals and vanadium which are soluble in the filtrate 2,
e) carrying out said second stage, the lixiviation stage defined in claim 1, on said filtrate 2 from stage d), with subsequent extraction of the metal oxides selected from the group formed by vanadium, molybdenum and tungsten, the extraction process possibly also being applied to said residual solid 1 obtained at stage c), to give a residual solid 2 and a filtrate 3.

**4.** Process of claim 3, characterised in that after the lixiviation stage the solid is subjected at a stage f) to a subsequent purification treatment, which is at least one of the following treatments :
- leaching with hot water
- heat treatment at a temperature above that at which the refractory metal aluminates are formed.

**5.** The method of any of claims 1 to 4, characterised in that after the lixiviation stage, when this is carried out in the presence of caustic soda, the filtrate 3 from said lixiviation is treated in the following stages, in cases where at least one metal selected from the group formed by vanadium, tungsten and molybdenum is present :
g) said filtrate from the lixiviation solution is cooled to a temperature generally from -2° C to 25° C with precipitation of vanadium,
h) the solution (filtrate 4) obtained in stage g) is dealuminated by the action of carbon dioxide gas at a temperature generally from 25° C to boiling temperature, with the gas flowing through at from 0,1 to 100 litres per hour per kilogram of catalyst treated, to produce sodium carbonate,
i) the sodium carbonate which emanates at least from the following operations :
- use at stage e) of claim 4 (or stage 2 of claim 1)
- formation in excess at stage h)

and which is soluble in the solution obtained at stage h), is precipitated to give hardly soluble sodium bicarbonate by the action of carbon dioxide gas, at a temperature from the upper limit of freezing to ambient temperature, the throughput of said gas being from 0,1 to 100 litres per hour per kilogram of catalyst treated.
j) the soluble sodium salts of any metal chosen from the group formed by vanadium, tungsten and molybdenum which is present in solution are precipitated by reaction with a soluble calcium salt from the filtrate from said lixiviation.

**6.** The method of any of claims 1 to 5, characterised in that after the lixiviation stage when this is carried out in the presence of sodium carbonate, the filtrate 3 from said lixiviation is treated in the following stages, in cases where at least one metal selected from the group formed by vanadium, tungsten, and molybdenum is present :
g) the solution (filtrate 3) obtained at stage 3 is dealuminated by the action of carbon dioxide gas at a temperature generally from 25° C to boiling temperature, the flow rate of said gas being from 0,1 to 100 litres per hour per kilogram of catalyst treated, producing sodium carbonate.
h) the sodium carbonate, which emanates at least from one of the following operations :
- use at stage e) of claim 4 (or stage 2 of claim 1)
- formation in excess at stage h) and which is soluble in the solution obtained at stage h), is precipitated to form hardly soluble sodium bicarbonate by the action of carbon dioxide gas at a temperature from the upper limit of freezing to ambient temperature, the flow rate of the gas being from 0,1 to 100 litres per hour per kilogram of catalyst treated.

i) the soluble sodium salts of any metal chosen from the group formed by vanadium, tungsten and molybdenum which is present in solution are precipitated by reaction with a soluble calcium salt

from the filtrate from said lixiviation.

**7.** Process according to claim 6, characterised in that the solution obtained (filtrate 3) is recycled at least once after stage e) by making at least one addition of sodium carbonate and by re-using the resultant solution for stage e), this recycling also being carried out before proceeding to stage g).

**8.** Process according to any one of claims 5 to 7, characterised in that the solution obtained at stage j) of claim 5 or stage i) of claim 6 is passed through a complexing resin.

**9.** The method of claim 8, characterised in that the complexing resin comprises at least one of the functions selected from the group formed by oxime, quinoline, oxime derivatives and quinoline derivatives.

**10.** The method of any of claims 5 to 9, characterised in that the calcium salt used at stage j) of claim 5 or stage i) of claim 6 is selected from the group formed by calcium chloride and calcium nitrate.

**Patentansprüche**

**1.** Behandlungsverfahren gegen Verschmutzung eines Raffinationskatalysators einer Erdölbeschickung, wobei der Katalysator mit einem Träger auf Basis wenigstens eines Aluminiumoxides desaktiviert wurde und Kohlenstoff, wenigstens ein Metall der Gruppe VIII (insbesondere Nickel, Kobalt und Eisen) und wenigstens ein Metall, das aus der Gruppe ausgewählt ist, die aus Vanadium und den Metallen der Gruppe VI (insbesondere Molybdän und Wolfram) besteht, enthält; wobei das Verfahren derart ist, daß:

1) man im Verlauf eines ersten Schrittes den Katalysator in Gegenwart eines Gases, das molekularen Sauerstoff umfaßt, bei einer Temperatur, die 600 °C nicht übersteigt, kalziniert,

und das dadurch gekennzeichnet ist, daß

2) man im Verlauf eines zweiten Schrittes Katalysatormetalle in Gegenwart einer wäßrigen Lösung, welche Natronlauge oder auch Natriumcarbonat in einer Konzentration von etwa 0,1 g und der Sättigung enthält, einer Extrahierung unterwirft, bei einer Temperatur, die zwischen der Umgebungstemperatur und der Siedetemperatur liegt, wobei die Extrahierung es erlaubt, ein Filtrat 2 , das Aluminium und wenigstens ein Metall, das aus der Gruppe ausgewählt ist, die aus Vanadium und den Metallen der Gruppe VI gebildet ist und einen Feststoff 1 zu erhalten, welcher wenigstens ein Metall der Gruppe VIII enthält.

**2.** Verfahren nach Anspruch 1, worin

a) man den verwendeten Katalysator vor dem zweiten Schritt einem Strippen durch ein Lösungsmittel unterwirft, um die anhaftenden Öle zu entfernen,

b) man den gestrippten Katalysator der Verfahrensweise des ersten Schrittes unterwirft, bevor man mit dem zweiten Schritt weiterverfährt.

**3.** Verfahren nach Anspruch 2, worin man am Ausgang des Schrittes a) und des Schrittes b)

c) eine Extrahierung des größten Teiles der Metallsulfate des in Schritt a) erhaltenen kalzinierten Katalysators mit permutiertem Wasser bewirkt,

d) dem in c) erhaltenen Filtrat 1 eine kaustische Base oder ein alkalisches Carbonat mit einem pH-Wert,der zwischen 10 und 11 liegt, zusetzt, mit nachträglichem Erhitzen, um die Metalle der Gruppe VIII, wie Nickel, Kobalt und Eisen, auszufällen und die löslichen Natriumsalze im Filtrat 2, die aus der Gruppe ausgewählt sind, die aus den Metallen der Gruppe VI und Vanadium gebildet sind, umzuwandeln,

e) den zweiten Schritt, dem in Anspruch 1 definierten Extrahierungsschritt, mit dem aus d) stammenden Filtrat 2 durch aufeinanderfolgende Extrahierung der Metalloxide, die aus der Gruppe ausgewählt sind, die aus Vanadium, Molybdän und Wolfram gebildet ist, bewirkt, wobei die Extrahierung gegebenenfalls auch mit dem in Schritt c) erhaltenen, verbleibenden Feststoff 1 unter Erhalt eines Teiles eines verbleibenden Feststoffes 2 und eines Filtrates 1 bewirkt werden kann.

**4.** Verfahren nach Anspruch 3, dadurch gekennzeichnet, daß am Ausgang des Extrahierungsschrittes der Feststoff einer abschließenden Reinigungsbehandlung in einem Schritt f) durch eine abschließende Reinigungsbehandlung unterworfen wird, welche wenigstens eine der folgenden Behandlungen ist:

- Extrahierung mit warmem Wasser

- thermische Behandlung bei einer Temperatur über der Bildungstemperatur von feuerfesten Metallaluminaten.

**5.** Verfahren nach einem der Ansprüche 1 bis 4, dadurch gekennzeichnet, daß am Ausgang des Extrahierungsschrittes, wenn dieser in Gegenwart von Natronlauge bewirkt wird, man das Filtrat 3 der Extrahierung gemäß den folgenden Schritten behandelt, im Fall, daß wenigstens ein Metall, das aus der Gruppe ausgewählt ist, die aus Vanadium, Wolfram und Molybdän gebildet ist, vorhanden ist:

g) das Filtrat der Extrahierungslösung wird auf eine Temperatur, die im allgemeinen zwischen -2 °C und 25 °C liegt, unter Ausfällung von Vanadium abgekühlt,

h) die in Schritt g) erhaltene Lösung (Filtrat 4) wird durch Einwirkung von gasförmigem Kohlendioxid bei einer Temperatur, die im allgemeinen zwischen 25 °C und der Siedetemperatur liegt, mit einem stündlichen Durchsatz des Gases und pro Kilogramm des behandelten Katalysators, der zwischen 0,1 und 100 Liter liegt, unter Bildung von Natriumcarbonat entaluminiert,

i) wobei das Natriumcarbonat aus wenigstens einer der folgenden Verfahrensweisen stammt:

- Verwendung bei Schritt e) aus Anspruch 4 (oder Schritt 2 aus Anspruch 1),
- Bildung eines Überschusses bei Schritt h)

und der lösliche Stoff in der in Schritt h) erhaltenen Lösung wird als weniger lösliches Natriumbicarbonat unter Einwirkung von gasförmigem Kohlendioxid bei einer Temperatur, die zwischen der oberen Grenztemperatur der Gefrierung und der Umgebungstemperatur liegt, ausgefällt, mit einem stündlichen Durchsatz und pro Kilogramm des behandelten Katalysators, der zwischen 0,1 und 100 Liter liegt,

j) die löslichen Natriumsalze aller Metalle, die aus der Gruppe ausgewählt sind, die aus Vanadium, Wolfram und Molybdän gebildet ist, und welche in Lösung vorhanden sind, werden durch Umsetzung mit einem löslichen Natriumsalz, ausgehend vom Filtrat der Extrahierung, ausgefällt.

**6.** Verfahren nach einem der Ansprüche 1 bis 5, dadurch gekennzeichnet, daß am Ausgang des Extrahierungsschrittes, wenn dieser in Gegenwart von Natriumcarbonat bewirkt wird, man das Filtrat 3 dieser Extrahierung gemäß den folgenden Schritten behandelt, im Fall, daß wenigstens ein Metall, das aus der Gruppe ausgewählt ist, die aus Vanadium, Wolfram und Molbdän gebildet ist, vorhanden ist:

g) die in Schritt e) erhaltene Lösung (Filtrat 3) wird durch Einwirkung von gasförmigem Kohlendioxid bei einer Temperatur, die im allgemeinen zwischwen 25 °C und der Siedetemperatur liegt, entaluminiert, mit einem stündlichen Durchsatz und pro Kilogramm des behandelten Katalysators, der zwischen 0,1 und 100 Liter liegt, unter Bildung von Natriumcarbonat,

wobei das Natriumcarbonat aus wenigstens einer der nachfolgenden Verfahrensweisen stammt:

- Verwendung bei Schritt e) des Anspruches 4 (oder Schritt 2 des Anspruches 1),
- Bildung im Überschuß bei Schritt h)

und der in Schritt h) erhaltene lösliche Stoff wird als weniger lösliches Natriumbicarbonat unter Einwirkung von gasförmigem Kohlendioxid bei einer Temperatur, die zwischen der oberen Grenztemperatur der Einfrierung und der Umgebungstemperatur liegt, ausgefällt, mit einem stündlichen Durchsatz und pro Kilogramm behandeltem Katalysator die zwischen 0,1 und 100 Liter liegt,

i) die löslichen Natriumsalze aller Metalle, die aus der Gruppe ausgewählt sind, die aus Vanadium, Wolfram und Molybdän gebildet ist, werden durch Umsetzung mit einem löslichen Calciumsalz, ausgehend von dem Extrahierungsfiltrat, ausgefällt.

**7.** Verfahren nach Anspruch 6, dadurch gekennzeichnet, daß man wenigstens eine Rückführung der nach Schritt e) erhaltenen Lösung (Filtrat 3) durchführt, indem man wenigstens einen Zusatz von Natriumcarbonat vornimmt und indem man die so für Schritt e) erhaltene Lösung wiederverwendet, wobei die Rückführung außerdem vor der Durchführung des Schrittes g) stattfindet.

**8.** Verfahren nach einem der Ansprüche 1 bis 7, dadurch gekennzeichnet, daß die in Schritt j) des Anspruches 5 oder in Schritt i) des Anspruches 6 erhaltene Lösung über ein komplexierendes Harz geleitet wird.

**9.** Verfahren nach Anspruch 8, dadurch gekennzeichnet, daß das komplexierende Harz wenigstens eine der Funktionen trägt, die aus der Gruppe ausgewählt sind, die aus Oxim, Chinolin, Oximderivaten und Chinolinderivaten gebildet ist.

**10.** Verfahren nach einem der Ansprüche 5 bis 9, dadurch gekennzeichnet, daß das in Schritt j) des Anspruches 5 oder in Schritt i) des Anspruches 6) verwendete Calciumsalz aus der Gruppe ausgewählt ist, die aus Calciumchlorid und Calciumnitrat gebildet ist.

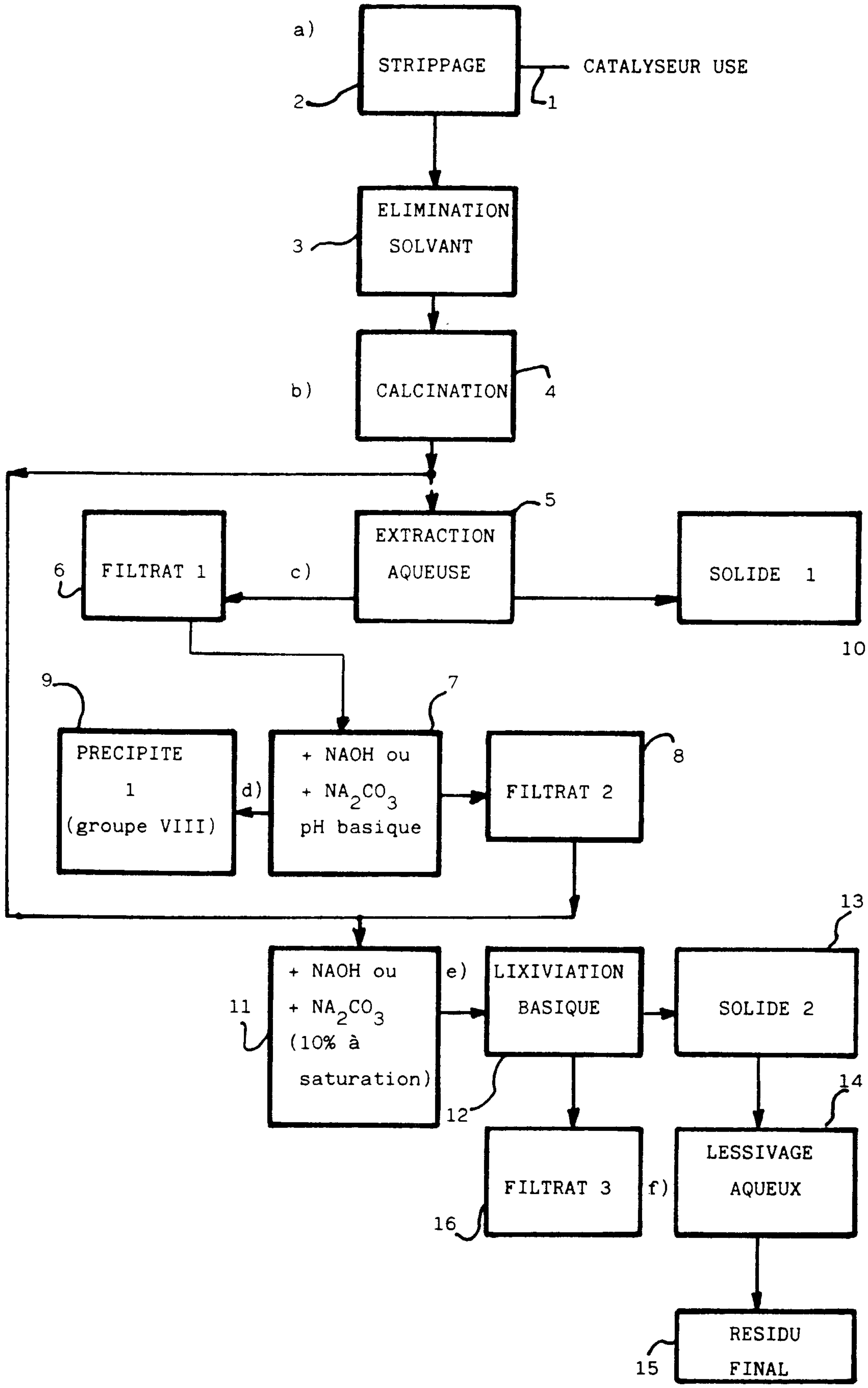
a)
STRIPPAGE
CATALYSEUR USE
1
2
3
ELIMINATION SOLVANT
b)
CALCINATION
4
5
EXTRACTION AQUEUSE
6
FILTRAT 1
c)
SOLIDE 1
10
9
7
PRECIPITE 1 (groupe VIII)
d)
+ NAOH ou
+ $NA_2CO_3$
pH basique
FILTRAT 2
8
13
11
+ NAOH ou
+ $NA_2CO_3$
(10% à saturation)
e)
LIXIVIATION BASIQUE
SOLIDE 2
12
14
FILTRAT 3
16
f)
LESSIVAGE AQUEUX
RESIDU FINAL
15

FIGURE 1

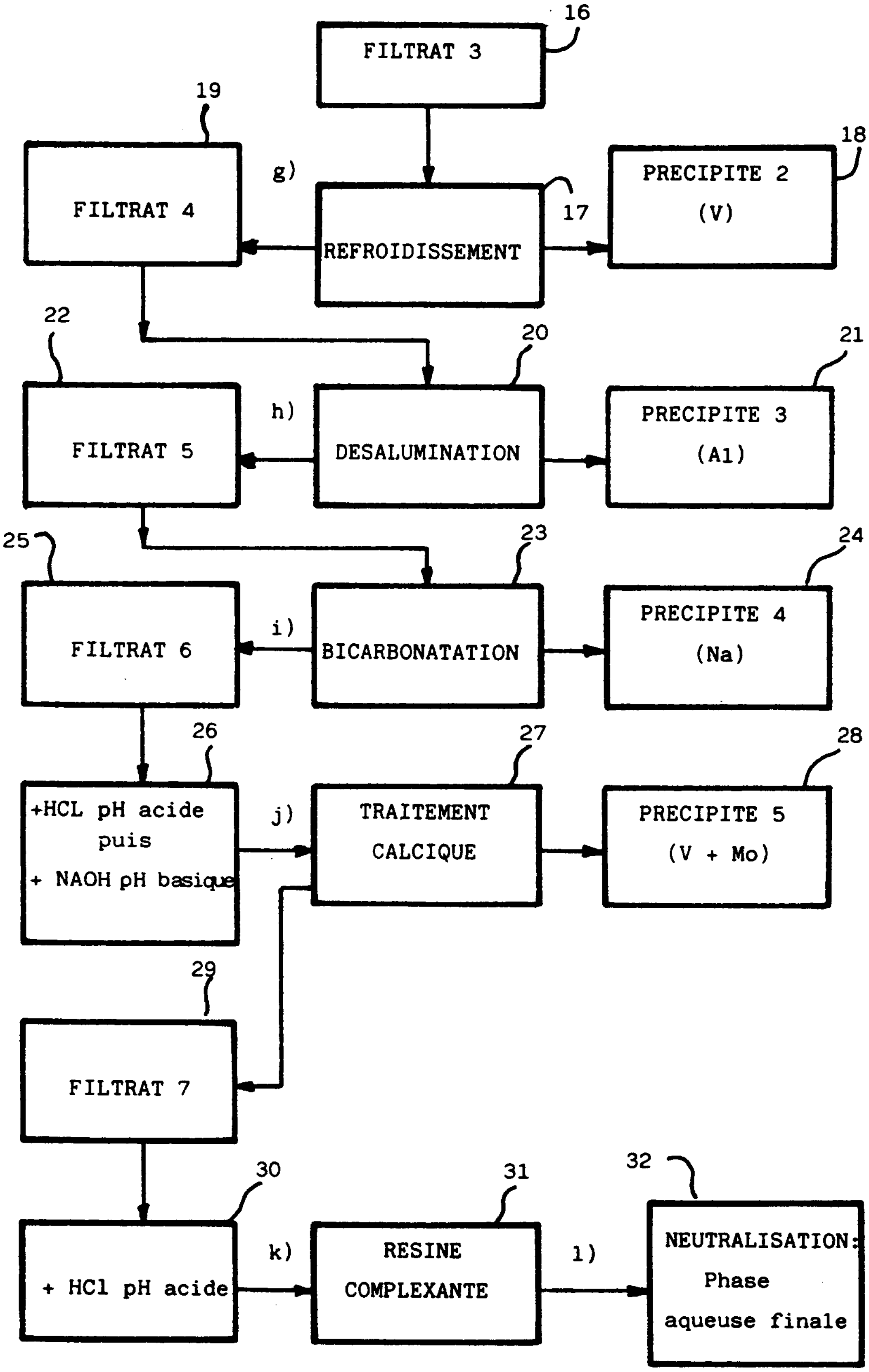
FILTRAT 3
16
19
18
FILTRAT 4
g)
REFROIDISSEMENT
17
PRECIPITE 2
(V)
22
20
21
FILTRAT 5
h)
DESALUMINATION
PRECIPITE 3
(Al)
25
23
24
FILTRAT 6
i)
BICARBONATATION
PRECIPITE 4
(Na)
26
27
28
+HCL pH acide
puis
+ NAOH pH basique
j)
TRAITEMENT
CALCIQUE
PRECIPITE 5
(V + Mo)
29
FILTRAT 7
30
31
32
+ HCl pH acide
k)
RESINE
COMPLEXANTE
l)
NEUTRALISATION:
Phase
aqueuse finale

FIGURE 2